# EUROPÄISCHE PATENTSCHRIFT

(11) **EP 0 391 190 B1**
(45) Veröffentlichungstag und Bekanntmachung des Hinweises auf die Patenterteilung: **21.07.1993**
(21) Anmeldenummer: 90105659.8
(22) Anmeldetag: 24.03.1990
(51) Int. Cl.: A61C 11/00

(54) **Artikulator für Kiefermodelle**
Dental articulator
Articulateur dentaire

(30) Priorität: 06.04.1989 DE 3911067
(43) Veröffentlichungstag der Anmeldung: 10.10.1990
(73) Patentinhaber: BAYER AG, 51368 Leverkusen (DE)
(72) Erfinder: Bley, Fritjof, D-8991 Achberg (DE); Dal Verme, Frederico, I-20024 Garbagnate Milano (IT)

(56) Entgegenhaltungen:
- CH-A- 350 757
- FR-A- 1 123 062
- US-A- 4 305 708

## Beschreibung

Die Erfindung geht aus von einem Artikulator zur Simulation der Lagebeziehungen und der Bewegungsabläufe im menschlichen Kausystem, nach dem ersten Teil von Anspruch 1 Ein derartiger Artikulator ist aus der FR-A-1 123 062 bekannt.

Artikulatoren sind zahntechnische Hilfsgeräte und dienen:
a) Zur Herstellung von funktionell paßgenauem Zahnersatz und
b) zur Diagnose bei der Modellanalyse als Teil der Funktionsanalyse des menschlichen Kausystems.

Der Artikulator kann die Bewegungsabläufe des Kausystems innerhalb seiner geometrischen Festwerte simulieren und es lassen sich in ihm die Zahnoberflächen von Oberkiefer- und Unterkiefer-Modellen in annähernd gleichen räumlichen Bahnen gegeneinander bewegen wie im biologischen System. Dabei wird jedoch immer nur eine Annäherung an die realen biologischen Bewegungsabläufe erreicht. Man unterscheidet zwischen Rotations- und Translationsbewegung:
a) Rotation: Reine Scharnierbewegung um einen festen Drehpunkt,
b) Translation: Gleitbewegung: Protrusionsbewegung (gerader Vorschub des Unterkiefers), Lateralbewegung (seitliche Verschiebung des Unterkiefers) und Retrusionsbewegung (Rückwärtsbewegung des Unterkiefers beim Schluckakt).

Die Artikulatoren werden eingeteilt in Arcon- und Non-Arcon-Typen. Beim Arcon-Typ wird das biologische System genau umgekehrt:
Das Unterteil des Artikulators ist unbeweglich und das Oberteil entgegen den natürlichen Bewegungen auf diesem Unterteil geführt, d. h. daß bei simulierter Protrusion das Oberkiefermodell nach hinten geführt wird. Alle bisher bekannten Arcon-Artikulatoren weisen Kugelköpfe als Kondylargelenke an ihren Unterteilen auf, so daß eine separate Einstellung des sogenannten Bennett-Winkels erforderlich ist.
Die Erfindung basiert auf einem Artikulator, bei dem die Kondylargelenke in Analogie zum menschlichen Unterkiefer ein Doppelkonusprofil aufweisen, auf dem sich die Gelenkführung abstützt. Solche der Walzenform der Unterkieferkondylen nachgebildeten Gelenke erlauben dreidimensionale Exkursionsbewegungen, die gelenkformale Simulation der Protrusions- und Lateralbewegungen sowie die gelenkanaloge Retrusionsbewegung des Unterkiefers.

Der Erfindung liegt die Aufgabe zugrunde, einen Artikulator zu entwickeln, der einerseits eine möglichst naturgetreue Simulation aller Kaubewegungen gestattet und andererseits eine erleichterte Handhabung bei der Montage der Kiefermodelle und bei der Herstellung von funktionell paßgenauem Zahnersatz bietet.

Diese Aufgabe wird erfindungsgemäß durch den in Anspruch 1 angegebenen Artikulator gelöst. Bei einem nach diesem Prinzip gebauten Artikulator sind die Vorteile miteinander vereint, daß die Voraussetzungen für einen Arcon-Artikulator erfüllt sind und damit eine optimale Annäherung an das natürliche Vorbild erzielt wird und zum anderen ein problemloses Arbeiten im Sinne einer erleichterten Handhabung ermöglicht wird.

Gemäß einer bevorzugten Ausführungsform der Erfindung ist vorgesehen, daß seitlich am Unterteil eine in vertikaler Richtung verschiebbare und bei einer vorgegebenen Position auch ausschwenkbare Verriegelungslasche zur relativen Arretierung, Teilentarretierung und vollständigen Entarretierung von Oberteil und Unterteil angeordnet ist.

Mit der Erfindung werden folgende weitere Vorteile erzielt:
- Das Konstruktionsprinzip gewährleistet bei Verwendung von Rahmenprofilen eine hohe mechanische Stabilität und damit eine hohe Präzision und Reproduzierbarkeit.
- Der Raum zwischen Oberteil und Unterteil ist von allen Seiten gut zugänglich (weitgehend freies Arbeitsfeld).
- Die Verriegelungslasche ist ebenfalls gut zugänglich und einfach zu bedienen.
- Aufgrund des einfachen Aufbaues mit Hilfe gängiger Konstruktionselemente kann die Herstellung mit programmgesteuerten Werkzeugmaschinen erfolgen (niedrigere Herstellungskosten).

Im folgenden wird ein Ausführungsbeispiel der Erfindung anhand von Zeichnungen näher erläutert. Es zeigen:
- Fig. 1: eine Gesamtansicht des Artikulators,
- Fig. 2: das Unterteil mit den Kondylargelenken,
- Fig. 3: die Gelenkführung in Seitenansicht,
- Fig. 4: die Verriegelungslasche in Seitenansicht bei vollständiger Arretierung und
- Fig. 5: die Verriegelungslasche in Seitenansicht bei vollständiger Entarretierung.

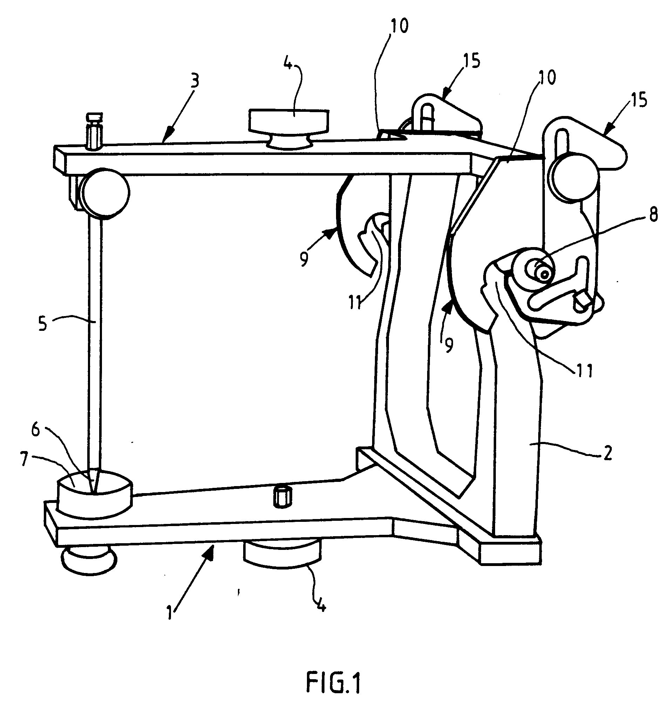

Der in Fig. 1 perspektivisch dargestellte Artikulator besteht aus einem Unterteil 1 in Form einer T-förmigen Platte mit einem aufgesetzten U-förmigen Basisrahmen 2 und einem ähnlich gestalteten Oberteil 3. Am Oberteil 3 und am Unterteil 1 sind Rändelschrauben 4 für die Befestigung der Kiefermodelle angeordnet. Am vorderen Ende des Oberteils 3 ist der sogenannte Inzisalstift 5 angebracht, dessen Spitze 6 bei zentriertem Artikulator (Null-Lage) genau im Zentrum des auf der gegenüberliegenden Seite am Unterteil 1 angebrachten Inzisaltellers 7 aufliegt. In dieser Null-Lage des Artikulators sind die beiden T-förmigen Teile 1 und 3 genau parallel. Der Inzisalstift 5 wird normalerweise dazu benötigt, um die Simulationsbewegungen von Oberteil 3 und Unterteil 1 auszuführen.

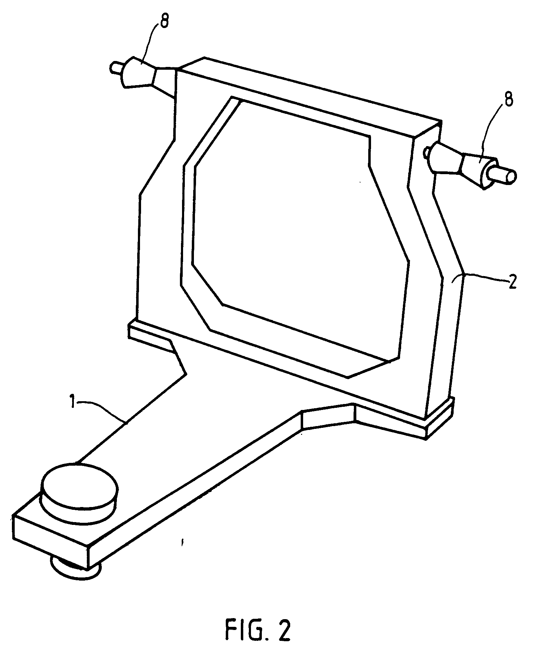

An dem mit dem Unterteil 1 verbundenen Basisrahmen 2 sind an dessen oberem Ende an beiden Seiten die Kondylargelenke 8 in Form eines Doppelkonus angeordnet. Die Gelenkachse verläuft dabei parallel zur Ebene von Unterteil 1 und Oberteil 3. Die zugehörigen Gelenke 9 sind am Oberteil 3 angeordnet. Sie bestehen aus den Gelenkplatten 10, in die die Gelenkschalen 11 eingefräst sind. Die beiden Gelenkplatten 10 sind fest mit den Seitenflächen des Oberteils 3 verbunden. Das Oberteil 3 stützt sich also über die Gelenkschalen 11 auf den Kondylargelenken ab (siehe auch Fig. 2).

Häufig wird auch gefordert, daß die sagittale Gelenkbahnneigung einstellbar ist und dementsprechend optimal an das Vorbild angepaßt werden kann. Dieser Forderung kann konstruktiv dadurch Rechnung getragen werden, daß die Gelenkschale 11 jeweils in eine Platte oder Scheibe eingefräst ist, die ihrerseits in der Ebene der Gelenkplatte 10, d.h. um die Gelenkachse drehbar ist und in der gewünschten sagittalen Winkelposition fixiert werden kann.

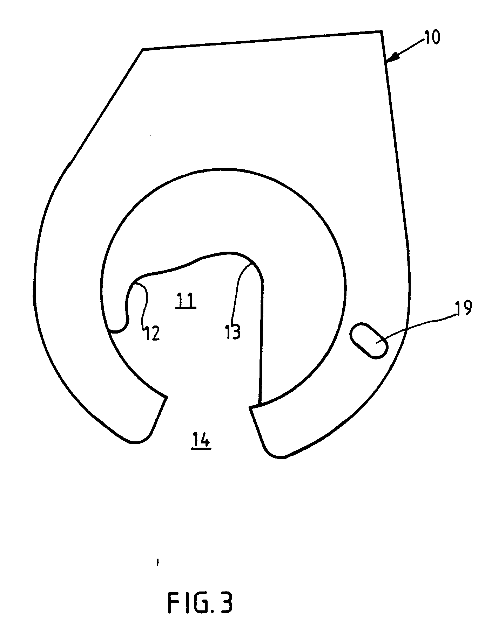

In Fig. 3 ist die Gelenkplatte vergrößert herausgezeichnet. Man erkennt, daß die Gelenkschale 11 ein spezielles Kurvenprofil aufweist, das sich aus zwei Kreisbahnabschnitten 12, 13 mit annähernd gleichen Radien zusammensetzt. Die Mittelpunkte der beiden Kreisbahnabschnitte sind jedoch in der Ebene der Gelenkplatte 10 gegeneinander verschoben. Die Gelenkschale 11 ist nach unten hin offen (Gelenköffnung 14). Die Öffnungen 14, deren laterale Weite etwas größer ist als der kleinste Durchmesser der Kondylargelenke 8, ermöglichen die Abnahme bzw. das Wiederaufsetzen des Oberteils 3. Beim Aufsetzen geht man so vor, daß das Oberteil 3 mit den Öffnungen 14 in den Gelenkplatten 10 über den Kondylargelenken 8 positioniert wird und dann so weit abgesenkt wird bis die Gelenkführung 12, 13 auf den Kondylargelenken 8 aufliegt. Gemäß Fig. 2 ist das Oberteil vom Unterteil abgenommen.

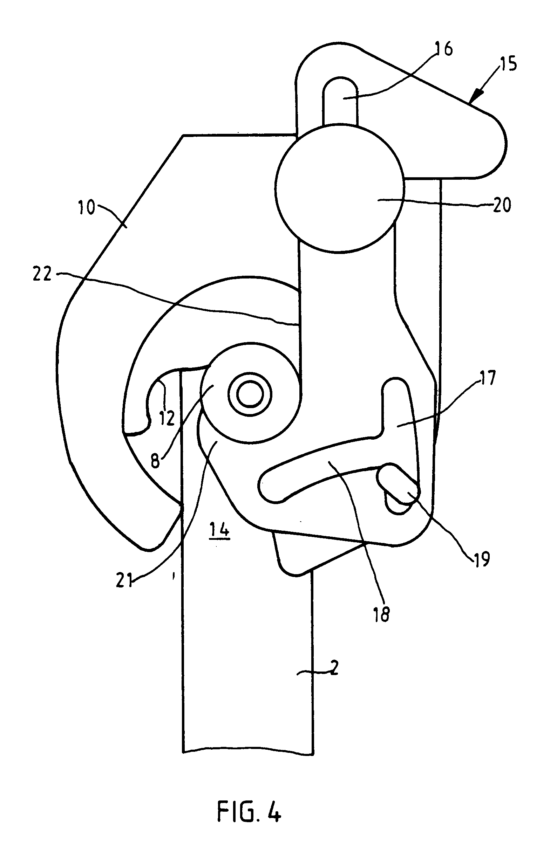

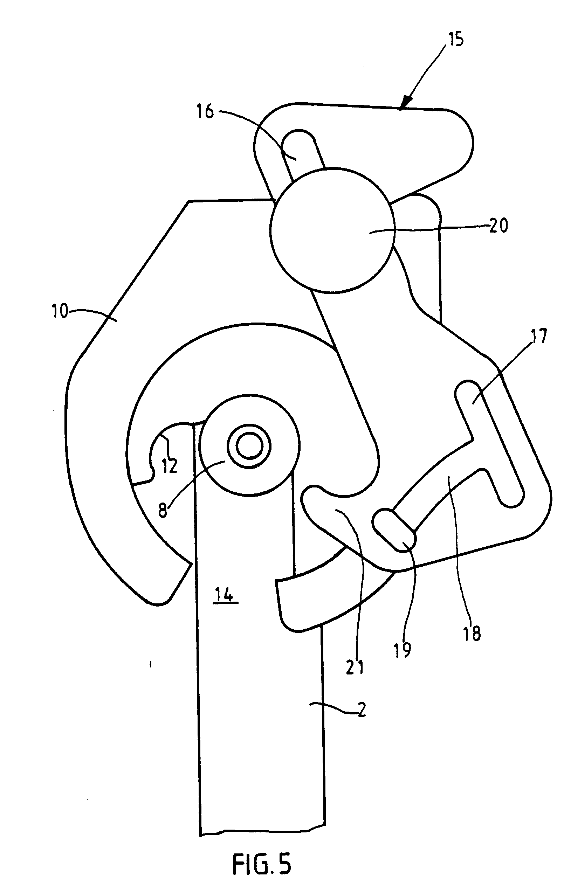

An beiden Gelenkplatten ist eine in vertikaler Richtung verschiebbare und in einer bestimmten Stellung auch ausschwenkbare Verriegelungslasche 15 angeordnet. Ihre Funktion wird nachfolgend anhand der Figuren 4 und 5 beschrieben. Die Verriegelungslasche 15 weist zwei vertikale Führungsschlitze 16, 17 und einen seitlichen, gekrümmten Führungsschlitz 18 auf, der quer zum Vertikalschlitz 17 verläuft und in diesen einmündet. Zur Führung der Verriegelungslasche 15 dient andererseits ein mit der Gelenkplatte 10 verbundener Stiftansatz 19 oder Nocken und die Feststellschraube 20,mit der eine Arretierung der Verriegelungslasche erfolgen kann.

In der in Fig. 4 dargestellten Position ist die Verriegelungslasche 15 hochgezogen und umschließt mit ihrem hakenförmigen Teil 21 am unteren Ende das Kondylargelenk 8 in der Weise, daß nur eine einfache Schwenk- bzw. Kippbewegung des Oberteils 3 relativ zum Unterteil entsprechend den in Zentrallage durchzuführenden Öffnungs- und Schließbewegungen (Okklusionskontrollen) möglich ist.

In einer Zwischenstellung (Mittelstellung) liegt nur die Kante 22 der Verriegelungslasche 15 am Außenumfang des Kondylargelenkes 8 an (nicht dargestellt). In dieser Stellung sind Vorgleit-, Diagonal- und Lateralbewegungen (Protrusion und Laterotrusion), jedoch keine Retrusionsbewegungen möglich. Die Retrusionsbewegung wird in dieser Stellung durch die Anschlagkante 22 verhindert. Diese Mittelstellung entspricht einer Teilentarretierung.

Gemäß Fig. 5 ist die Verriegelungslasche 15 seitlich ausgeschwenkt. Dabei schiebt sich der Führungsnocken 19 in den Seitwärtsschlitz 18. Diese Stellung entspricht der völligen Entarretierung. Es sind alle Bewegungen, insbesondere auch die Retrusionsbewegung, möglich. In dieser Position kann auch das Oberteil 3 vom Unterteil 1 problemlos abgenommen werden,da die Gelenköffnung 14 völlig freigegeben ist. Insgesamt ist die Verriegelungslasche 15 gut zugänglich und kann in den drei beschriebenen Positionen auf einfache Weise justiert und mittels der Feststellschraube 20 arretiert werden.

## Patentansprüche

1. Artikulator zur Simulation der Lagebeziehungen und der Bewegungsabläufe im menschlichen Kausystem, der aus einem Unterteil (1) und einem vom Unterteil (1) abnehmbaren Oberteil (3) besteht, die über Kondylargelenke (8) und eine dazugehörige Gelenkführung miteinander verbunden sind, wobei die Kondylargelenke (8) in Richtung der horizontalen Gelenkachse ein Doppelkonusprofil aufweisen und am Unterteil (1) angeordnet sind, und wobei die am Oberteil (3) angeordneten Gelenkführungen (10, 11) jeweils eine Gelenköffnung (14) und ein Kurvenprofil aufweisen, dadurch gekennzeichnet, daß die Gelenkführungen von sich quer zu den Kondylargelenken erstreckenden Gelenkplatten (10) mit Gelenkschalen (11) gebildet sind, wobei das Kurvenprofil in den Gelenkschalen (11) vorgesehen ist und sich aus zwei Kreisbahn-Abschnitten (12, 13) mit annähernd gleichen Radien, aber zueinander in der Ebene der Gelenkplatte (10) versetzten Mittelpunkten zusammensetzt.

2. Artikulator nach Anspruch 1, dadurch gekennzeichnet, daß seitlich am Unterteil (1) eine in vertikaler Richtung verschiebbare und bei einer vorgegebenen Position auch ausschwenkbare Verriegelungslasche (15) zur relativen Arretierung, Teilentarretierung und vollständigen Entarretierung von Oberteil (3) und Unterteil (1) angeordnet ist.

## Claims

1. Articulator for simulating the positional relations and motional sequences in the human masticatory system, comprising a bottom part (1) and a top part (3) removable from the bottom part (1), said parts being connected to one another via condylar joints (8) and an associated joint guide, with the condylar joints (8) having a biconical profile in the direction of the horizontal joint axis and being disposed on the bottom part (1) and with the joint guides (10, 11) disposed on the top part (3) each having a joint opening (14) and a curve profile, characterized in that the joint guides are formed by joint plates (10) extending at right angles to the condylar joints and having joint dishes (11), the curve profile being provided in the joint dishes (11) and comprising two circular path portions (12, 13) of approximately equal radii but with their centres offset relative to one another in the plane of the joint plate (10).

2. Articulator according to claim 1, characterized in that a locking clip (15), which is displaceable in a vertical direction and in a preset position is also capable of swinging out, is disposed laterally on the bottom part (1) for relative arresting, partial de-arresting and full de-arresting of top part (3) and bottom part (1).

## Revendications

1. Articulateur pour la simulation des relations de position et des déroulements des mouvements dans le système masticatoire humain, qui consiste en une partie inférieure (1) et en une partie supérieure (3) qui peut être séparée de la partie inférieure (1), qui sont reliées entre elles par des articulations condyliennes (8) et par un guide d'articulation associé, dans lequel les articulations condyliennes (8) présentent en direction de l'axe d'articulation horizontal un profil en cône double et sont disposées sur la partie inférieure (1), et dans lequel les guides d'articulation (10, 11) prévus sur la partie supérieure (3) comportent chacun une ouverture d'articulation (14) et un profil incurvé, caractérisé en ce que les guides d'articulation sont constitués par des plaques d'articulation (10) qui s'étendent transversalement aux articulations condyliennes et qui sont munies d'enveloppes d'articulation (11), le profil incurvé étant prévu dans les enveloppes d'articulation (11) et étant constitué par deux segments circulaires (12, 13) de rayons sensiblement identiques mais dont les centres sont décalés l'un par rapport à l'autre dans le plan de la plaque d'articulation (10).

2. Articulateur selon la revendication 1, caractérisé en ce qu'il est prévu latéralement sur la partie inférieure (1) une patte de verrouillage (15) déplaçable en direction verticale et également pivotable dans une position prédéterminée, pour le blocage relatif, le déblocage partiel et le déblocage total de la partie supérieure (3) et de la partie inférieure (1).
